# EUROPEAN PATENT APPLICATION

(11) **EP 1 054 497 A2**
(43) Date of publication of application: **22.11.2000**
(21) Application number: 00303924.5
(22) Date of filing: 10.05.2000
(51) Int. Cl.: H02K 1/24, H02K 3/487, H02K 15/00

(54) **Method of manufacturing a component for a rotating machine, and a rotor including such components**

(30) Priority: 17.05.1999 GB 9911445
(71) Applicant: Lucas Industries Limited, London W1Y 4DJ (GB)
(72) Inventor: De Cooper-Jones, Mark, Hunt End, Redditch B97 5NE (GB)
(74) Representative: Beck, Simon Antony

(57) **Abstract**

A component is provided for a rotating machine in which the component is built of an alternating sequence of "hoop" layers where a resin impregnated tap (4) is wound helically around a former, and "axial" layers where strips of tape are arranged parallel to the longitudinal axis of the component. These layers are then compressed and cured, before the component is machined to its final shape.

## Description

The present invention relates to a method of manufacturing a component for a rotating machine, and to a rotor including such components.

Switched reluctance generators comprise rotors and stators both of which carry a plurality of teeth projecting towards one another. This arrangement means that relative rotation of the rotor with respect to the stator gives rise to viscous or windage losses as the fluid, which may be a liquid, such as a lubricant or air, in the gap between the rotor and the stator becomes turbulent.

US5739615 discloses that windage losses can be reduced by filling the gap between the teeth of the rotor, which teeth form the rotor poles, such that the rotor has a substantially cylindrical outer surface. This patent then goes on to recognise that at high rotational speeds, the fillers may bow radially outwardly and upset the balance of the rotor. In order to overcome this, this prior art document teaches the provision of securing attachment discs along the rotor shaft such that the fillers are truncated into relatively short elements. This arrangement increases the manufacturing complexity associated with forming a rotor and also results in a physically larger machine for a given electrical performance since the laminate stack of the rotor becomes extended and electromagnetic efficiency is reduced.

US4918831 also discloses using inter-polar filler elements. The elements are formed of a non-magnetic material, such as stainless steel or inconel alloys, having a high electrical resistivity. The filler elements are electron beam or laser welded to the pole pieces of the rotor. It is certain that such use of a conductive, albeit high electrical resistance, insert and welding of the insert to the pole pieces would seriously degrade the electrical isolation between laminations along the laminate stack of the rotor and give rise to increased eddy current losses.

US5703421 discloses a rotor for a variable reluctance machine in which the rotor is segmented by a plurality of barriers which serve to partition the gap between the rotor and the stator into a plurality of chambers, which is alleged to reduce windage losses and to improve heat dissipation.

According to a first aspect of the present invention, there is provided a method of manufacturing components suitable for use in rotating machines, the method comprising the steps of depositing around a former which has a first axis a plurality of layers in an alternating sequence, the layers comprising layers of a first type formed of a fibrous material in which the longitudinal axes of the fibres lie in a loop around the first axis, and layers of a second type in which the longitudinal axes of the fibres lie substantially parallel to the first axis, the layers being impregnated with a bonding agent to bond the layers together, and the layers being built up until the component is oversized and the outer most layer is of the first type, the bonding agent is then activated and the exterior surface of the component is machined back to produce a component of the required size, removing the outer most layer of the first type in the process.

It is thus possible to provide a component which is substantially homogenous. Furthermore, the fibrous material and the bonding agent can both be insulating, thereby preventing eddy current losses. Additionally, it is possible to produce a lightweight component which is also very structurally rigid, and this significantly reduces the tendency of the component to bow radially outwards at high speed due to centripetal forces

Preferably the component is subjected to further machining steps, for example to cut it down to a predetermined length and also to machine attachment regions into, for example, the opposing ends of the component. The component may be cut into elongate sections which serve to form inter-polar filler components for a rotor of a rotating machine.

Preferably the former is a mandrel having a radius corresponding to the desired radius of curvature for the innermost surface of the component, for example, the root diameter of the inter-polar space of the rotor.

Preferably the fibrous material is in the form of strips of material in which fibres are predominantly axially orientated along a common direction. The fibres may be carbon fibre material, as this provides a high strength and is suitable for use in high temperature environments. However, other materials such as Kevlar, glass or other fibre materials may also used in appropriate circumstances. Advantageously these materials we impregnated with a bonding agent prior to use.

Advantageously the bonding agent is a resin. Epoxy resin is a suitable bonding agent.

Preferably the fibrous material is provided in elongated strips, which are relatively narrow.

The term "relatively narrow" should be construed in a purposive manner. The layers of the first type may be formed by winding the strip of fibrous material in a helical manner along the former such that the edges of adjacent layers along the helix abut one another, but do not significantly overlap. The width of the strip can be considered to be relatively narrow if the longitudinal axis of the fibres are only a few degrees away from the ideal direction, which is at 90° to the longitudinal axis of the former. Acceptable performance has been obtained with the direction of the fibres lying at between 80° to 88° with respect to the longitudinal axis.

Preferably the radially innermost layer is a layer of the first type. The layers of the first type will hereinafter be referred to as "hoop" layers. The first hoop layer may be formed from several thin layers of the fibre material wound around each other until an acceptable thickness is reached. Typically the first hoop layer comprises 2 to 4 layers of material.

Preferably layers of the second type, which will hereinafter be referred to as "axial" layers, we formed by laying strips of the fibrous material onto the former and previously deposited layers, with the axes of the fibres being substantially aligned with the longitudinal axis of the former. The strips are deposited such that adjacent strips abut one another but have minimum, preferably zero, overlap. Once a circumference is completed, the final strip may be trimmed to size such that it does not substantially overlap with the first strip of that axial layer. Alternatively, this overlap may be permitted.

Preferably the abutment regions between adjacent strips in the hoop layers are longitudinally offset from one another. This avoids the formation of weakened regions within the completed product.

Preferably the abutment regions between adjacent layers of fibre in neighbouring axial layers are circumferentially offset from one another. This avoids the formation of weak points within the finished component and also avoids the formation of systematic density variations around the component and/or gives rise to a more uniform radial thickness around the component.

Preferably the alternating series of hoop and axial layers is built up until the component is slightly oversized. The term "oversized" needs to be construed in a purposive manner. It may be necessary to perform initial experiments when constructing a new component type for the first time to determine how many layers are required, and how much bigger the component should be than its desired final diameter in order that the subsequent processing steps can be performed satisfactorily.

Once the component has been built up to its final oversized form, it is preferably compressed to squeeze out excess bonding agent and to hold the material stable during a curing process. Advantageously the component is bound by a binding material, for example a strong non-porous, non-adhesive tape which is capable of surviving the cure temperature satisfactorily.

Preferably, after curing, the binding tape is removed and the component is machined back to its desired size. For the formation of components for a rotor, the component will be formed into a cylinder, and is ground back such that the external radius of the cylinder is equal to or slightly less than the depth of the rotor slot (i.e. the components do not stand proud of the poles of the rotor). The machining process may be performed by grinding, and removes the totality of the final hoop layer to reveal the axial layer below. Thus the final hoop layer is effectively a sacrificial layer.

Once the cylinder has been correctly sized, in the radial direction, it may be removed from the former, i.e. mandrel, and cut to an appropriate length. Preferably the cutting is performed using a diamond saw so as to leave accurate smooth edges.

Preferably the edge portions are reduced in thickness in order to form retention points which may be used to hold segments of the material within the rotor.

Preferably the cylinder is then cut axially to form a plurality of part circular segments which form inter-polar fillers in a rotating machine. Unused end of portions of the material and/or unused portions intermediate the sections used for the inter-polar fillers may be analysed to determine consistency of the component in order to ensure that it is substantially homogeneous, and free of detects, such as voids within its structure, to within acceptable tolerance limits.

The individual inter-polar fillers should have the same inner diameter as the rotor and substantially the same thickness as the depth of the rotor poles. Furthermore, if cut correctly, each inter-polar filler should fit exactly into the inter-polar space. However, there may be a requirement for some further machining to match the inter-polar filler into the root of the rotor poles, typically to provide a clearance chamfer, if the rotor poles join the main rotor body at a radius, which is the normal practice to reduce stress concentrations at these points.

According to a second aspect of the present invention, there is provided a rotor comprising a plurality of poles, and a plurality of inter-polar fillers, wherein the fillers are formed according to the first aspect of the present invention.

Advantageously, additional support regions against radial deflection may be provided by forming a region of reduced radius into the rotor, and then winding a hoop of fibre into the region of reduced radius. Advantageously the fibre contains a bonding agent and the fibre is cured such that it forms a band of material which inhibits radial deformation. Advantageously the same material is used as was used to form the inter-polar fillers so as to match physical properties.

According to a third aspect of the present invention, there is provided a component for a rotating machine formed in accordance with the first aspect of the present invention.

Preferably the or each rotor element is not frilly post cured before machining. The remainder of the curing process may be finished *in situ*, with the rotating machine operating in order to provide some stress relief from the components before the component cures completely.

The present invention will further be described, by way of example, with reference to the accompanying drawings, in which;
Figure 1 schematically illustrates the formation of a hoop layer;
Figure 2 schematically illustrates the formation of an axial layer;
Figure 3 illustrates a completed cylinder;
Figure 4 is a side view of inter-polar filler cut from the cylinder of figure 3;
Figure 5 is an end view of the inter-polar filler of figure 4;
Figure 6 schematically illustrates a rotor including fillers according to the present invention;
Figure 7 is a cross section through an end cap of the rotor of figure 6; and
Figure 8 is cross section through the rotor of figure 6 along line a-a'.

The manufacture of a plurality of inter-polar fillers for use with a variable reluctance generator will now be described. A mandrel 2 whose external radius corresponds to the radius of curvature required by the innermost portion of the inter-polar filler, is overwound with a helical layer of thin carbon fibre material 4. The carbon fibre material, in the form of a woven tow or tape, would, ideally, be wound such that longitudinal axes of fibres within the tow, which correspond to the longitudinal axis of the tow itself, were perpendicular to a longitudinal axis 6 of the mandrel. However, as a practical matter, a elongated tow is wound in a helical manner such that the angle θ between the axis 6 and the axis of the tow lies typically between 84° and 88°. Layers of tow formed in this manner are herein referred to as "hoop" layers. The radially innermost hoop layer may itself comprise multiple thinner layers of fibre in the same orientation until an acceptable thickness is reached. The adjacent turns of the helical layer are wound such that they have little or no mutual overlap. However, significant voids between adjacent windings are not acceptable.

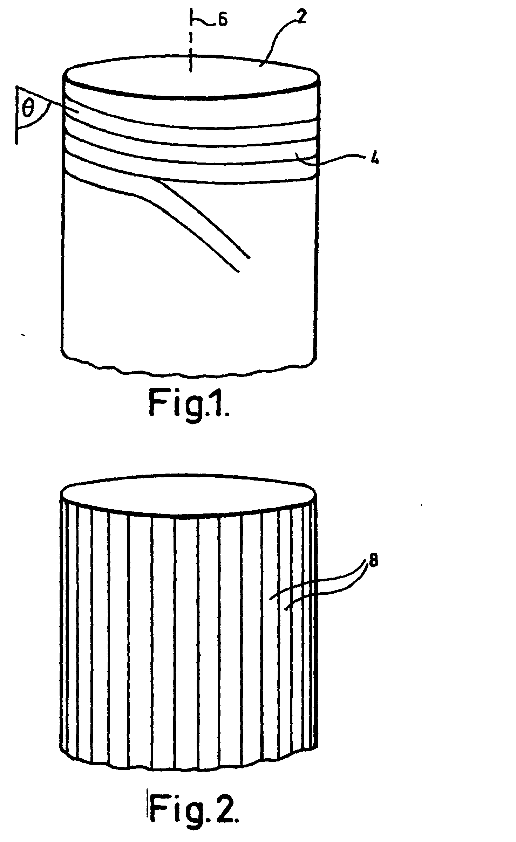

Once the first hoop layer is complete, an axial layer is deposited. Figure 2 schematically illustrates an axial layer. Adjacent strips of carbon fibre tow are arranged in abutting manner around the component, so as to over lie the underlying hoop layer. It will be appreciated that the circumference of the layer grows as more and more layers are deposited and consequently the final one of the strips will need to be trimmed to size if it is not to overly the first strip which was deposited in the axial layer. Once the first axial layer is completed, subsequent hoop and axial layers are formed on the component in the alternating manner to build the component, in this case a cylinder, up to an appropriate desired wall thickness. It should be noted that the subsequent hoop layers do not directly assist the inter-polar filler to withstand the bowing forces experienced during rotation, but they do provide structural rigidity to the components and enable the manufacture of the axial layers required for the high bending stiffness in the inter-polar fillers.

During formation of each of the axial layers, care is required in order to minimise bunching or separation of the carbon fibres which could produce local density variations in the finished components.

The cylinder is built up, until it reaches the desired thickness, with the final layer being a hoop layer. There is an additional over thickness allowance to account for any tendency for out of roundness as a result of the manufacturing process. Each of the layers is made of resin impregnated fibre. The component is compressed to squeeze out excess resin. Suitable compression may be performed by winding a strong non-porous tape in a tight binding manner around the component. This serves not only to squeeze out the excess resin and thus maximise the available fibre content and hence stiffness and strength in the component, but also to hold the component stable during a subsequent curing process. Once the component is bound, it is cured at elevated temperature for a time sufficient to ensure that the resin has hardened sufficiently for subsequent machining, ie grinding.

Once the cylinder has cured, the binding material is removed and a grinding operation is performed on the cylinder 12 so as to accurately reduce the wall thickness of the cylinder to a diameter which will be equal to, or slightly less than, the radius of the rotor slot, i.e. the radius of the teeth of the rotor. The number of layers deposited on the component was selected, by experimentation, such that the grinding process to produce the correct diameter component removes completely in the outermost hoop layer in order to reveal the axial layer below. The outermost hoop layer effectively functions as a sacrificial layer which serves to hold the lower layers in place during the grinding and curing stages of production.

The applicant has realised that it is advantageous for the outermost layer in the final product to be an axial layer rather than a hoop layer. In order to appreciate this, it is worthwhile to consider the forces acting on an inter-polar filler while it is in use in a rotating machine. The act of machining the component down to size can thin or break the fibres. Viscous drag in a rotating machine can act directly on the ends of fibres in a hoop layer to peel them away from the hoop layer thereby giving rise to a failure mode. However, the same viscous drag does not exert such a peeling action on fibres of a axial layer. The primary reason for this is that the peeling action is perpendicular to the longitudinal axis of an inter polar filler . Furthermore, when machined, the axial layer gives rise to a smoother surface finish than does a hoop layer. Thus, hoop layers are more susceptible to damage than are axial layers.

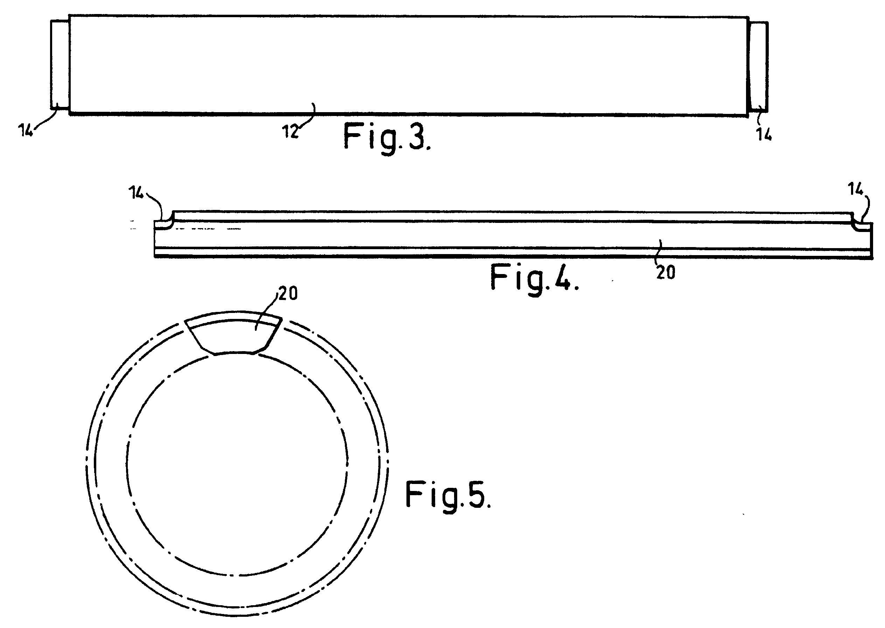

Once the cylinder 12 is machined down to the correct diameter, it is removed from the mandrel and cut to an appropriate length. Cutting using a diamond saw gives satisfactory results. The opposing ends 14 of the cylinder are then further machined in order to reduce their diameter, thereby forming attachment shoulders, which engage with matching projections of end flanges in a completed rotor. The cylinder is then cut longitudinally in order to form a plurality of inter-polar fillers therefrom. One of such fillers is shown in side view in figure 4, and in end view in figure 5. As shown more clearly in figure 5, the cutting may be performed at a inclined angle with respect to a radially extending line from the centre of the cylinder 12 in order match the side walls of the inter-polar filler 20 accurately to the profile of the poles of the rotor.

A plurality of substantially identical inter-polar fillers can be cut from a single cylinder. The manufacturing technique serves to provide fillers which are both structurally strong and substantially homogenous. This is important as it reduces out of balance forces within the rotor. The inter-polar fillers may be subject to further machining operations in order to match their profile to a root portion of each of the rotor poles, as these are often radiussed in order to reduce stress concentration at the junction between the poles and the body of the rotor. Typically a small chamfer for clearance is added to both sides at this point along the whole length of the inter-polar filler.

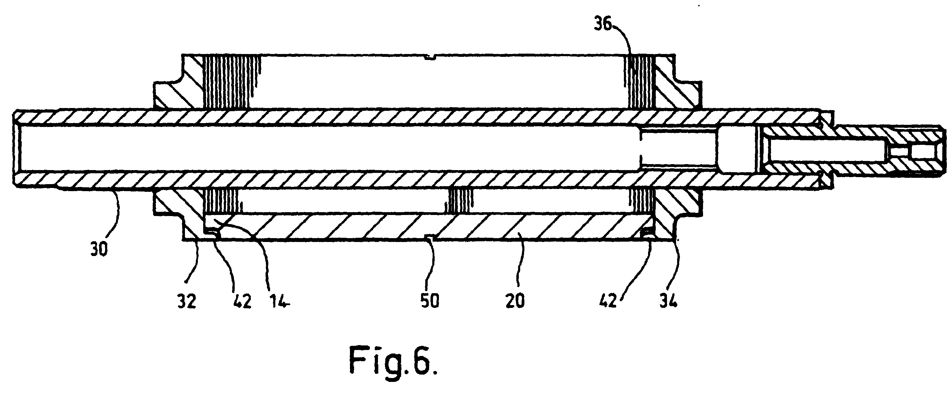

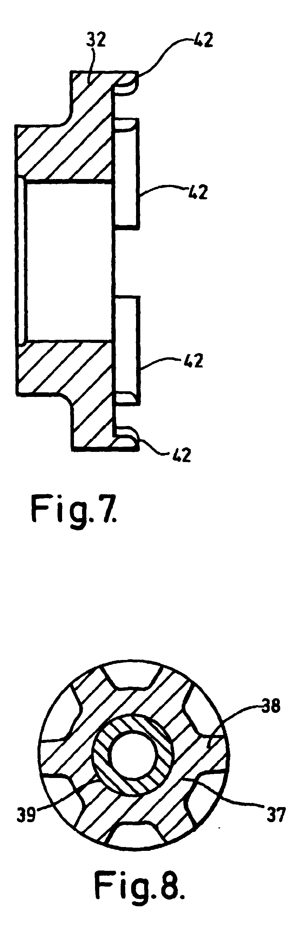

A rotor is schematically illustrated, in cross section, in figure 6. In order to identify the construction of the rotor more clearly, the plane of cross section above the longitudinal axis of the rotor passes through a centre of one of the poles of the rotor, whereas the plane of cross section beneath the longitudinal axis of the rotor passes through the centre of one of the inter-polar fillers. The rotor comprises a rotor shaft which is profiled towards either end thereof to define regions for engaging support bearings and drive gears or drive splines. First and second flanges 32 and 34 serve to delimit either end of a laminate stack 36. The laminate stack comprises plurality of thin magnetic laminates each of which has a generally circular body 37 from which a plurality of teeth, or poles 38 extend, as illustrated in figure 8. It is well known in the art to build rotors from a plurality of laminates in order to reduce eddy current losses. Each of the laminates has a centrally disposed hole through which the shaft of the rotor 30 passes in a close fit. A first one of the flanges, for example flange 32 may be permanently welded to the rotor 30. The laminate stack 36 is then built up and the inter-polar fillers 20 placed in position before the other flange 34 is affixed to the rotor 30, for example again by welding, thereby securing the laminate stack in position.

Figure 7 illustrates a cross section through one of the flanges 32, and 34. A plurality of retaining elements 42 extend from the flange 32 towards the laminate stack 36. Each of the elements 42 has an arcurate profile and, in use, engages the shoulders 14 at either end of the inter-polar filler 20 in order to hold it in position.

Optionally, the inter-polar fillers may be bonded to the rotor along the whole of their length for greater stiffness and strength. In such circumstances, the dimensions of the inter-polar fillers need to be adjusted to take into account the volume occupied by the bonding agent between the lamination stack and the filler. Irrespective of whether additional bonding is applied or not, the component dimensions and tolerances are selected to ensure a substantially movement free fit with appropriate allowance to accommodate differential thermal expansion between the metallic rotor and the synthetic composite inter-polar fillers.

Although the inter-polar fillers as described hereinabove are both lightweight and rigid, due to the combination of rotor length and diameter they can nevertheless experience some slight flexing at the high rotational rates which may be sustained during operation of the rotor. This can be accommodated by arranging for the surface of the inter-polar fillers to lie at a reduced radius compared to the outer surface of the poles of the rotor, say in the order of 0.2mm or so. This then allows a small amount of bowing to be tolerated. Additionally or alternatively, one or more regions of the rotor may be further machined to define a groove 50 therein. Carbon fibres, impregnated with resin, may then be wound into the groove and cured in order to form a ring which serves to inhibit radial deformation of the inter-polar fillers. Alternatively other suitable materials may be used to form the intermediate retaining ring.

It is thus possible to provide inter-polar fillers of uniform characteristic, and to provide a rotor wherein the fillers are resistant to deformation due to rotational forces and also are matched thereby avoiding out of balance forces.

It should be noted that the rotor may run in a hot environment, and this heat can be used to perform a final post curing stage of the fillers if desired. This may be used to achieve stress relaxation in the finished product during a "running in" phase of the product before it is subjected to full operating loads.

## Claims

1. A method of manufacturing components suitable for use in rotating machines, the method comprising the steps of depositing around a former (2), which former has a first axis (6), a plurality of layers in an alternating sequence, the layers comprising layers of a first type formed of a fibrous material (4) in which the longitudinal axes of the fibres lie in a loop around the first axis (6), and layers of a second type in which the longitudinal axes of the fibres lie substantially parallel to the first axis (6), said layers being impregnated with a bonding agent to bond the layers together, and the layers being built up until the component is oversized and the outermost layer is the first type, the bonding agent is then activated and the exterior surface of the component is machined back to produce a component of required size, removing the outermost layer of the first type in process.

2. A method as claimed in claim 1, characterised in that the component is subjected to further machining operations which include at least one of cutting to a predetermined length and machining attachment regions into the component.

3. A method as claimed in claim 1 or 2, characterised in that the fibrous material is in the form of strips (4, 8) in which the fibres are predominantly axially orientated along a common direction.

4. A method as claimed in claim 3, characterised in that the strips are relatively narrow.

5. A method as claimed in claim 3 or 4, characterised in that the layers of the first type are formed by winding a strip (4) of fibrous material in a helical manner along the former such that the edges of adjacent layers along the helix abut one another but do not significantly overlap.

6. A method as claimed in claim 5, characterised in that the longitudinal axes of the fibres make an angle of between 80° and 88° with respect to the first axis (6).

7. A method as claimed in any one of the preceding claims, characterised in that the radially inner most layer is the first type.

8. A method as claimed in any one of claims 3 to 6, characterised in that layers of the second type are formed by laying strips (8) of fibrous material onto the former and previously deposited layers, with the axes of the fibres being substantially aligned with the first axis (6), and the strips are deposited such that adjacent strips abut one another but have minimum overlap.

9. A method as claimed in claim 8, characterised in that once a circumference is completed, a final strip thereof is trimmed to size such that is does not substantially overlap with the first strip of that axial layer.

10. A method as claimed in any one of claims 3 to 6, characterised in that abutment regions between adjacent strips in the layers of a first type are longitudinally offset from one another so as to avoid the formation of weakened regions within the component.

11. A method as claimed in claim 8 or 9, characterised in that abutment regions between adjacent strips in layers of the second type are circumferentially offset from one another.

12. A method as claimed in any one of the preceding claims, characterised in that following the step of building the component up to an oversized form and prior to curing, the component is compressed to squeeze out excess bonding agent.

13. A method as claimed in claim 12, characterising in that, prior to curing, the component is bound by a binding material.

14. A method as claimed in any one of the preceding claims, characterised in that the machining process is performed by grinding.

15. A method as claimed in any one of the preceding claims, further comprising the step of cutting the component into a plurality of part circular segments so as to form inter-polar fillers (20) for use in a rotating machine.

16. A method as claimed in claim 15, in which the component has a two part curing process, in which the final part is performed when the component is in situ.

17. A rotor comprising a plurality of poles and a plurality of inter-polar fillers (20), wherein the fillers are manufactured in accordance with the method as claimed in any one of the preceding claims.

18. A rotor as claimed in claim 17, characterised in that the rotor has additional support regions formed by a hoop of fibre wound into a region of reduced radius.

19. A rotor as claimed in claim 18, characterised in that the hoop contains a bonding agent as is cured so as to form a band of material which inhibits radial deformation of the inter-polar fillers.
